Europäisches Patentamt

European Patent Office

Office européen des brevets

(19)

(11) Veröffentlichungsnummer: **0 467 000 A1**

## (12) EUROPÄISCHE PATENTANMELDUNG

(21) Anmeldenummer: **90810549.7**

(22) Anmeldetag: **18.07.90**

(51) Int. Cl.⁵: **A47J 39/02**, A47G 23/04

(43) Veröffentlichungstag der Anmeldung:
**22.01.92 Patentblatt 92/04**

(84) Benannte Vertragsstaaten:
**CH DE FR GB IT LI**

(71) Anmelder: **FINESSA AG**
**Zürcherstrasse 204e**
**CH-9014 St. Gallen(CH)**

(72) Erfinder: **Wüst, Ernst**
**Kamorstrasse 4**
**CH-9030 Abtwil(CH)**

(74) Vertreter: **Kulhavy, Sava, Dipl.-Ing.**
**Patentanwaltsbüro S.V. Kulhavy Postfach**
**450 Kornhausstrasse 3**
**CH-9001 St. Gallen(CH)**

(54) **Wärmeschüssel und Verwendung derselben.**

(57) Die Wärmeschüssel (5) dient zur Aufnahme von Tafelgeschirr (10). Der Grundkörper (15) derselben weist eine im wesentlichen flache Bodenpartie (16) sowie eine Seitenpartie (1) auf und er ist aus einem Verbundwerkstoff. Dieser umfasst eine erste Schicht (21) aus einem Grundmaterial, welche den Kern des Verbundwerkstoffes bildet. Der Verbundwerkstoff umfasst ferner weitere Schichten (22 und 23) aus einem Deckwerkstoff, welche auf der ersten Schicht (21) aufplattiert sind. Das Grundmaterial (21) weist eine Wärmespeicherkapazität auf, welche grösser ist als die des Deckwerkstoffes (22 bzw. 23).

Die Speicherkapazität dieser Wärmeschüssel ist wesentlich grösser und die Höhe derselben wesentlich kleiner als dem bei den bisherigen Schüsseln der Falls ist.

Fig. 3

Die vorliegende Erfindung betrifft eine Wärmeschüssel, die zur Aufnahme von Tafelgeschirr, insbesondere eines Tellers, bestimmt ist, und deren Grundkörper eine im wesentlichen flache Bodenpartie sowie eine Seitenpartie aufweist, wobei die Seitenpartie sich an die Bodenpartie anschliesst, sowie eine Verwendung derselben.

Wärmeschüssel dieser Gattung sind bereits bekannt. Eine dieser vorbekannten Wärmeschüsseln weist zwei etwa tellerförmige Schalen auf, von welchen die untere Schale tiefer ist als die oben liegende Schale. Die obere Schale ist in der unteren Schale eingesetzt und die Ränder derselben sind miteinander luft- und somit auch feuchtigkeitsdicht verbunden. Eine solche Verbindung kann beispielsweise durch Bördeln erreicht werden. Zwischen den zwei Schalen ist somit ein Hohlraum vorhanden. Im mittleren Bereich der Wärmeschüssel befindet sich ein flacher Ring im genannten Hohlraum, wobei dieser Ring aus einem wärmespeichernden Material ist. Der Ring ist an der Unterseite der oberen Schale befestigt, damit zwischen diesen ein möglichst guter Wärmekontakt besteht. Der übrige Teil des Hohlraumes ist mit einem gut wärmeisolierenden Material ausgefüllt. Dieses Isoliermaterial befindet sich somit auch zwischen dem Ring und der unteren Schüsselschale, damit der Ring über die untere Schüsselschale möglichst wenig Wärme verliert.

Solche Wärmeschüsseln dienen beispielsweise zur Aufnahme eines Tellers, auf dem sich eine warme Speise befindet. Die Wärmeschüssel ist vorgewärmt und sie soll, zusammen mit einer darauf gesetzten Glocke, die Speise möglichst lange warm und optisch schön halten. Es versteht sich, dass die Schüssel zunächst angewärmt werden muss, bevor der Teller oder ähnlich in diese eingesetzt werden kann. Die Wärme muss der Wärmeschüssel von aussen zugeführt werden. Damit diese Wärmezufuhr bei einer grossen Anzahl von Schüsseln zugleich erfolgen kann, werden die Schüsseln gestapelt. Bei einem solchen Stapel kann die Wärme der Wärmeschüssel nur von der Seitenwand derselben her zugeführt werden. Zwischen der Wärmequelle und dem Speicherring befindet sich jedoch das bereits erwähnte Wärmeisolationsmaterial. Die Anwärmung der Schüsseln dauert daher verhältnismässig lang und ausserdem wird dabei verhältnismässig viel Energie unnütz verbraucht.

Es versteht sich, dass Speisen mit Hilfe einer solchen Wärmeschüssel auch kalt gehalten werden können. Zu diesem Zweck muss der Speicherring allerdings abgekühlt werden. Hierbei ergeben sich im wesentlichen dieselben Probleme wie bei der Erwärmung desselben.

Die Herstellung einer solchen Wärmeschüssel, deren Konstruktion ziemlich kompliziert ist, ist auch entsprechend teuer.

Die Aufgabe der vorliegenden Erfindung ist, eine Wärmeschüssel anzugeben, welche die genannten sowie noch weitere Nachteile nicht aufweist.

Diese Aufgabe wird bei der Wärmeschüssel der eingangs genannten Gattung erfindungsgemäss so gelöst, wie dies im kennzeichnenden Teil des Anspruchs 1 definiert ist.

Nachstehend werden Ausführungsformen der vorliegenden Erfindung anhand der beiliegenden Zeichnungen näher erläutert. Es zeigt:

Fig. 1 eine Einrichtung, welche zur Anwärmung der vorliegenden Schüssel verwendet werden kann,

Fig. 2 in einem vertikalen Schnitt die vorliegende Wärmeschüssel und

Fig. 3 vergrössert einen Ausschnitt aus Fig. 2.

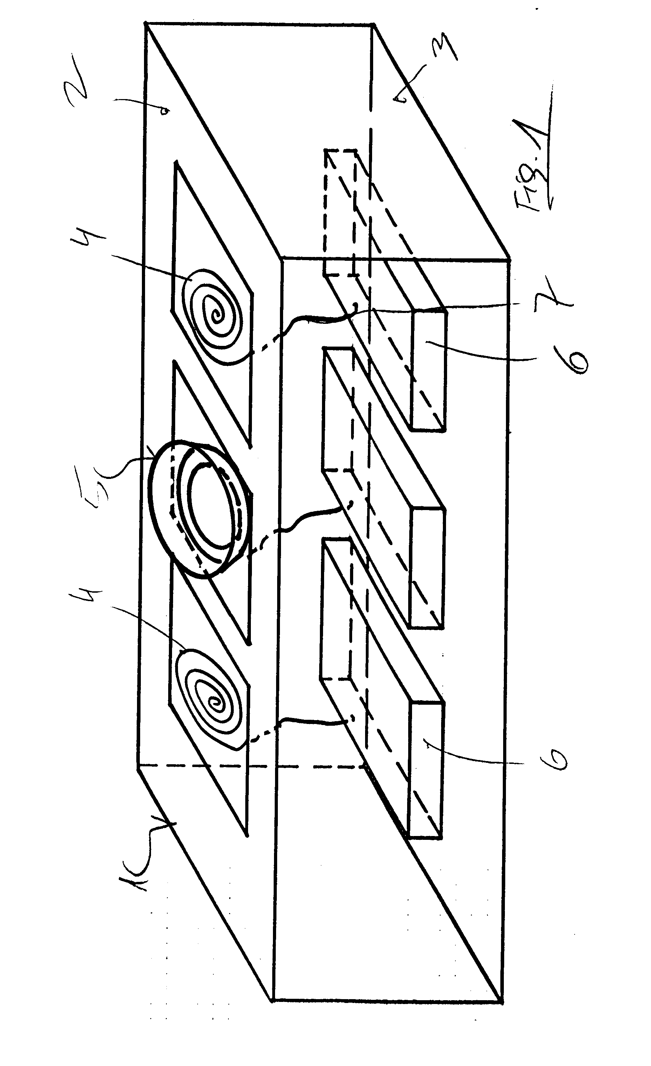

Die Einrichtung (Fig. 1), welche zur Anwärmung der vorliegenden Wärmeschüssel 5 verwendet werden kann, weist ein längliches Gestell 1 mit horizontalen Flächen 2 und 3 auf. In der oberen Fläche 2 des Gestells 1 ist eine Anzahl von Heizschleifen 4 eingelassen. Diese Schleifen 4 bilden eine Reihe, welche sich in der Längsrichtung der Fläche 2 erstreckt. Die jeweilige Wärmeschüssel 5 wird mittels einer nicht dargestellten jedoch an sich bekannten Fördervorrichtung von einer Heizschleife 4 zur anderen befördert. Beim Ueberfahren der jeweiligen Heizschleife 4 wird die Wärmeschüssel weiter angewärmt. Die Anzahl der Heizschleifen 4 sowie die Verweilzeit der Schüssel 5 über der jeweiligen Heizschleife 4 sind so gewählt, dass die Wärmeschüssel 5 am Ende der Anwärmefläche 2 die gewünschte Endtemperatur aufweist.

In dieser Weise kann eine Anzahl von Wärmeschüsseln 5 in einem Durchlaufverfahren und gleichzeitig auf die gewünschte Temperatur gebracht werden, wobei diese Anzahl von Wärmeschüsseln 5 der Anzahl der Heizschleifen 4 entspricht. Die Heizschleifen 4 können Widerstandskörper enthalten, welche elektrische Energie in Wärme umwandeln. Die Heizschleifen 4 können jedoch auch als Induktoren ausgeführt sein, welche an eine Quelle 6 hochfrequenter Energie über Anschlüsse 7 angeschlossen sind. Die Generatoren 6 befinden sich auf der unteren horizontalen Fläche 3.

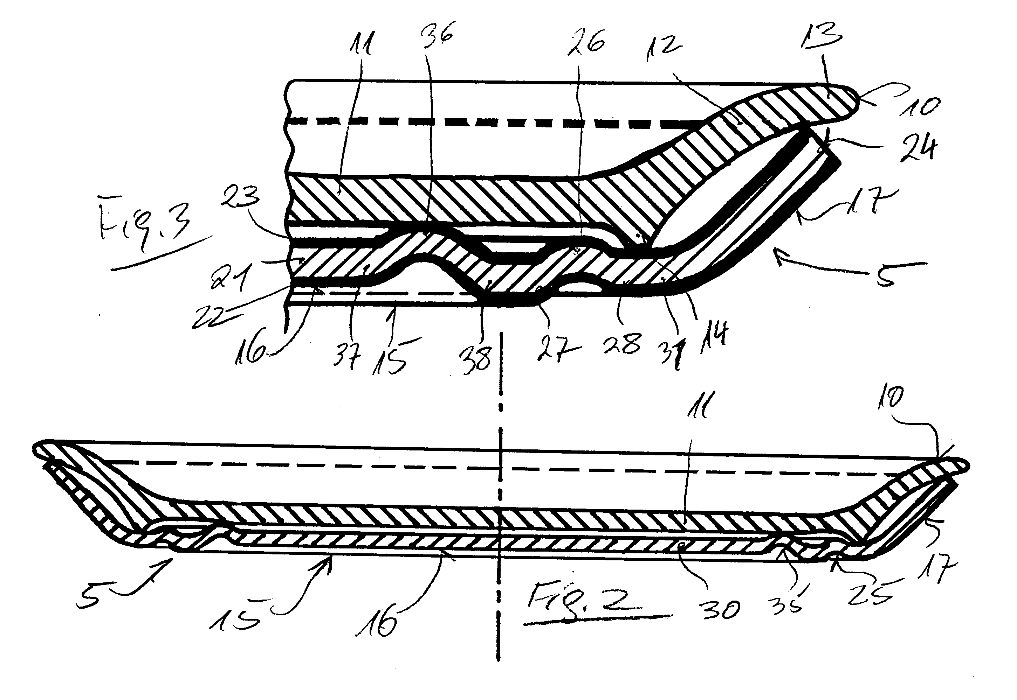

In Fig. 2 ist die vorliegende Wärmeschüssel 5 in einem vertikalen Schnitt dargestellt. In der Wärmeschüssel 5 ist ein Teller 10 eingesetzt, in dem sich beim Gebrauchszustand eine Speise befindet. Der Teller 10 umfasst einen Boden 11 (Fig. 3), an dessen Rand sich die Teller-Seitenwand 12 anschliesst. Der freie Rand 13 der Seitenwand 12 ist so geformt, dass er praktisch horizontal oder zumindest beinahe horizontal verläuft. Die Unterseite des Tellerbodens 11 ist mit einem Fuss 14 versehen, welcher als ein Wulst ausgeführt ist. Dieser Wulst 14 erstreckt sich entlang einer Tellerpartie, in der sich die Tellerwand bzw. der Tellerbauch 12 an den Tellerboden 11 anschliesst. Anstelle des Tellers 10 kann sich in der Wärmeschüssel 5 eine Eintopfschale, eine Menuplatte, ein Menuteller, ein dreiteiliger Menuteller usw. befinden.

Die Wärmeschüssel 5 umfasst einen Grundkörper 15, welcher eine im wesentlichen flache Bodenpartie 16 sowie eine Seitenpartie 17 aufweist. Die Seitenpartie 17 schliesst sich an die Bodenpartie 16 nahtlos und stumpf an, so dass der Grundkörper 15 ein Stück bildet. Die Seitenpartie 17 des Grundkörpers 15 hat im wesentlichen die Form des Mantels eines von der Bodenpartie 16 weg und aufwärts sich erstreckenden und sich öffnenden bzw. erweiternden Konusses.

Der Grundkörper 15 der Wärmeschüssel 5 ist aus einem Verbundwerkstoff. Der Verbundwerkstoff umfasst eine erste Schicht 21 aus einem Grundmaterial, welche den Kern des Verbundwerkstoffes bildet. Als Grundmaterial soll ein Werkstoff verwendet werden, welcher eine sehr hohe Wärmekapazität aufweist und/oder welcher eine hohe Wärmeleitfähigkeit aufweist. Beispielsweise Aluminium kann als ein solcher Werkstoff verwendet werden.

Der Verbundwerkstoff umfasst ferner zumindest eine weitere Schicht 22, welche als Deckwerkstoff des Verbundmaterials dient. Diese zweite bzw. äussere Schicht 22 ist im dargestellten Beispiel an der Aussenseite der Grundschicht 21 angeordnet und unter anderem schützt sie die Kernschicht 21 vor allfälligen mechanischen Beanspruchungen bzw. Beschädigungen. Die Aussenschicht 22 soll möglichst gut wärmeleitend sein. Diesem Zweck ist Stahl am besten gerecht, welcher auf der Kernschicht 21 aufplatiert ist. Ein solcher Stahl kann ein ferritischer bzw. serritischer Stahl, insbesondere Edelstahl einer an sich bekannten Art sein. Ein solcher Stahl kann ferritisches Material enthalten bzw. einschliessen. Das Grundmaterial 21 soll eine Wärmeleitfähigkeit aufweisen, welche besser ist als die Wärmeleitfähigkeit des Deckwerkstoffes 22.

Im dargestellten Beispiel ist auch die andere Seite der Kernschicht 21 mit einer Aussenschicht 23 als Deckwerkstoff versehen, welche aus demselben Material sein kann wie die erst genannte Aussenschicht 22 des Verbundwerkstoffes. Die zweite Aussenschicht 23 kann jedoch auch aus einem austenitischem Stahl, insbesodere Edelstahl sein. Diese zweite Schicht 23 ist auf der Kernschicht 21 ebenfalls aufplattiert.

Die Bodenpartie 16 des Grundkörpers 15 weist zumindest eine Welle 25 auf, welche in Fig. 2 und 3 im Schnitt dargestellt ist und welche sich entlang dem Rand der Bodenpartie 16 und in einem Abstand von diesem erstreckt. Wegen dem genannten wellenförmigen Verlauf dieses Abschittes 25 weist der Schüsselboden 16 einen erhabenen Kamm 26 sowie Täler 27 und 28 auf, welche sich an die Seiten des Kammes 26 anschliessen. Wegen dem genannten wellenförmigen Verlauf dieser Bodenpartie 25 weisen auch die einzelnen Schichten 21, 22 und 23 des Verbundwerkstoffes den genannanten Verlauf auf. Dies deswegen, weil diese Schichten 21, 22 und 23 sich über die gesamte Länge bzw. Fläche des Schüsselgrundkörpers 15 in demselben Abstand voneinander erstrecken. Folglich verlaufen die Schichten 21, 22 und 23 auch in diesem gekrümmten Abschnitt 25 des Bodens 16 parallel zueinander.

Diese Schüssel 5 kann beispielsweise so hergestellt werden, dass eine Scheibe bzw. Rondelle aus einer Tafel herausgeschnitten bzw. herausgestanzt wird, welche aus einem Verbundwerkstoff ist. Diese Scheibe wird in eine Presse gelegt, deren Werkzeug der Scheibe die Form der Schüssel verleiht. Die äussere Randpartie 24 der Schüssel 5 kann dabei "offen" bleiben. Dies bedeutet, dass die einzelnen Schichten 21, 22 und 23 des Verbundwerkstoffes hier an der Oberfläche der Schüssel 5 erscheinen. Aus ästhetischen Gründen kann die Scheibenrandpartie 24 jedoch mit einem geeigneten Abschluss versehen sein, welcher die genannten Schichten 21, 22 und 23 verdeckt.

Die Welle 25 im Schüsselboden 16 ist derart ausgeführt, dass die Täler 27 und 28 derselben, zwischen welchen der Kamm 28 liegt, die Endpartien der Welle 25 bilden. Die übrigen Partien des Schüsselgrundkörpers 15 schliessen sich somit an die Talpartien 27 und 28 der Welle 25 vorteilhaft stumpf an. An die innere Endpartie 27 der Welle 25 kann sich, in einer einfachen Ausführung der vorliegenden Schüssel, der Mittelabschnitt 30 des Schüsselbodens 16 anschliessen, welcher im wesentlichen scheibenförmig ist. An die äussere Endpartie 28 der Welle 25 kann sich entweder ein im wesentlichen ringförmiger Aussenabschnitt 31 des Bodens 16 oder direkt die Seitenpartie 17 des Schüsselgrundkörpers 15 anschliessen. Die dem Mittelabschnitt 30 der Bodenpartie 16 zugewandte Endpartie 27 der Welle 25 liegt höher als die der Seitenpartie 17 zugewandte Endpartie 28 der Welle 25. Die Folge davon ist, dass im äusseren Talabschnitt 28 der Bodenpartie 16 der Fuss 14 des Tellers 10 liegen kann und dass der Abstand zwischen dem Mittelabschnitt 30 des Schüsselbodens 16 und dem Tellerboden 11 klein gehalten werden kann, was einen intensiven Wärmeübergang zwischen dem wärmespeichernden Material 21 der Schüssel 5 und dem flächenhaften Tellerboden 11 ermöglicht.

In Fig. 2 und 3 ist eine Wärmeschüssel dargestellt, welche zwei Wellen 25 und 35 aufweist. Diese Wellen 25 und 35 sind zueinander konzentrisch angeordnet. Die zweite Welle 35 ist praktisch gleich ausgeführt wie die erste Welle 25. Der Kamm der zweiten Welle 35 ist mit 36 und die Endpartien derselben sind mit 37 und 38 bezeichnet. Die Wellen 25 und 35 sind so ausgeführt, dass sie über ihre einander zugewandten Talpartien 27 und 38 miteinander verbunden sind. Die Seitenpartie 17 des Schüsselgrundkörpers 15 oder der Aussenabschnitt 31 des Schüsselbodens 16 schliesst sich an die erste, äussere Bodenwelle 25 an, und zwar an ihre äussere Endpartie 28. Der Mittelabschnitt 30 der Bodenpartie 16 schliesst sich dagegen an die zweite, innere Bodenwelle 35 an, und zwar die innere Endpartie 37 derselben. Die dem Mittelabschnitt 30 der Bodenpartie 16 zugewandte Endpartie 37 der zweiten, inneren Welle 35 liegt höher als die andere Endpartie 38 dieser inneren Welle 35.

Der Kamm 26 der aussen liegenden Welle 25 liegt tiefer als der Kamm 36 der innen liegenden Welle 35. Die Wellenkämme bzw. Wellenberge 25 und 36 bilden ringförmige Wülste an der Innenseite der Bodenpartie 16, wobei der Fuss 14 des in die Wärmeschüssel 5 eingesetzten Tellers 10 mit wenigstens einem dieser Wülste 25 bzw. 35 in Eingriff stehen kann. Diese Wülste 25 bzw. 35 können somit die Lage eines Geschirrstückes 10 in der Wärmeschüssel 5 definieren. Ferner kann die Unterseite des Geschirrbodens 11 auf dem Scheitel zumindest eines der Wülste 25 bzw. 35 aufliegen.

Die miteinander verbundenen Täler 27 und 38 der beiden Wellen 25 und 35 liegen tiefer als jenes Tal 28 der aussen liegenden Welle 25, an welches sich die Seitenpartie 17 des Schüsselgrundkörpers 15 bzw. der Aussenabschnitt 31 der Bodenpartie 16 anschliesst. Die miteinander verbundenen Täler 27 und 38 der beiden Wellen 25 und 35 liegen tiefer auch gegenüber jenem Tal 37 der innen liegenden Welle 35, an welches sich der Mittelabschnitt 30 des Schüsselbodens 16 anschliesst. Dabei liegt dieses Tal bzw. dieser Endabschnitt 37 der Innenwelle auch höher als der Endabschnitt 28 der Aussenwelle 25. Folglich bilden die verbundenen Täler 27 und 38 einen von der Unterseite der Bodenpartie 16 abstehenden Wulst. Dieser Wulst 27, 38 reduziert die Grösse der Berührungsfläche zwischen der Bodenpartie 16 und jener Unterlage, beispielsweise der Auflagefläche 2 der Erhitzungseinrichtung, auf der die Wärmeschüssel 5 ruht. Dies ermöglicht, dass die Wärmeschüssel 5 auf einer Unterlage leichter verschoben werden kann.

Die vorliegende Wärmeschüssel bietet mehrere Vorteile gegenüber den vorbekannten Wärmeschüsseln. Wie gesagt, bildet das Grundmaterial 21 des Verbundwerkstoffes einen Wärme- bzw. Kältespeicher. Dieses Material 21 erstreckt sich über die gesamte Fläche der Wärmeschüssel 5, so dass die Speicherkapazität bei der vorliegenden Wärmeschüssel wesentlich grösser ist als dem bei den bisherigen Wärmeschüsseln der Fall war.

Zwischen dem Speichermaterial 21 und der Wärme- bzw. Kältequelle 1 liegt nur die Deckschicht 22 bzw. 23, welche jedoch ebenfalls aus einem wärmeleitenden Material ist. Folglich kann die Erhitzung oder Abkühlung des Speichermaterials 21 viel schneller als bisher erfolgen, was beträchtliche Ersparnisse an Energie in der betreffenden Quelle ermöglicht. Damit kein unnötiger Wärmeaustausch mit der Umgebung der Wärmeschüssel erfolgt, kann die Wärmeschüssel 5 samt dem Teller 10 zwischen zwei wärmeisolierenden und an sich bekannten Glocken aufbewahrt werden.

Da die Gesamtdicke der vorliegenden Wärmeschüssel wesentlich kleiner ist als die Dicke der vorbekannten Schüsseln, lassen sich jetzt wesentlich mehr Schüsseln in einem gegebenen Dispenser stapeln als dies bisher möglich war.

Die vorliegende Wärmeschüssel kann in einem Dispenser oder auf einem Fliessband 1 (Fig. 1) problemlos und schnell, z.B. auf eine Temperatur von 120 Grad Celsius innerhalb von 22 Sekunden, erwärmen. Diese Erhitzung kann dabei vorteilhaft mit Hilfe eines Induktors erfolgen, weil dies die Zusammensetzung des Verbundwerkstoffes 15 ermöglicht.

**Patentansprüche**

1. Wärmeschüssel, die zur Aufnahme von Tafelgeschirr (10), insbesondere eines Tellers, bestimmt ist, und deren Grundkörper (15) eine im wesentlichen flache Bodenpartie (16) sowie eine Seitenpartie (1) aufweist, wobei die Seitenpartie sich an die Bodenpartie anschliesst, dadurch gekennzeichnet, dass der Grundkörper (15) der Wärmeschüssel (5) aus einem Verbundwerkstoff ist.

2. Wärmeschüssel nach Anspruch 1, dadurch gekennzeichnet, dass der Verbundwerkstoff eine erste Schicht (21) aus einem Grundmaterial aufweist, welche den Kern des Verbundwerkstoffes bildet, und dass das Verbundmaterial zumindest eine weitere Schicht (22 bzw. 23) aus einem Deckwerkstoff aufweist, welche auf der ersten Schicht (21) aufplattiert ist.

3. Wärmeschüssel nach Anspruch 2, dadurch gekennzeichnet, dass das Grundmaterial (21) eine Wärmespeicherkapazität aufweist, welche grösser ist als die des Deckwerkstoffes (22 bzw. 23).

4. Wärmeschüssel nach Anspruch 3, dadurch gekennzeichnet, dass das Grundmaterial (21) Aluminium und der Deckwerkstoff (22 bzw. 23) Stahl ist.

5. Wärmeschüssel nach Anspruch 4, dadurch gekennzeichnet, dass der Stahl ferritische Teilchen einschliesst.

6. Wärmeschüssel nach Anspruch 1, dadurch gekennzeichnet, dass die Seitenpartie (17) des Grundkörpers (15) sich an den Rand (30) der Bodenpartie (16) desselben nahtlos anschliesst, so dass der Grundkörper (15) ein Stück bildet.

7. Wärmeschüssel nach Anspruch 6, dadurch gekennzeichnet, dass die Seitenpartie (17) des Grundkörpers (15) im wesentlichen die Form des Mantels eines von der Bodenpartie (16) weg und aufwärts sich erstreckenden und öffnenden bzw. erweiternden Konusses aufweist.

8. Wärmeschüssel nach Anspruch 6, dadurch gekennzeichnet, dass in der Bodenpartie (16) zumindest eine Welle (25 bzw. 35) ausgeführt ist, dass diese Welle sich entlang dem Umfang der Bodenpartie (16) erstreckt und dabei derart ausgeführt ist, dass die Täler (21 und 28 bzw. 37 und 38) der Welle, zwischen welchen der Kamm (26 bzw. 36) derselben liegt, die Endpartien der Welle bilden, und dass die übrigen Partien des Schüsselgrundkörpers (15) sich an die Talpartien der Welle vorteilhaft stumpf anschliessen.

9. Wärmeschüssel nach Anspruch 8, welche zwei Wellen aufweist, dadurch gekennzeichnet, dass die Wellen (25,35) konzentrisch angeordnet sind, dass die Seitenpartie (17) des Schüsselgrundkörpers (17) sich an die erste, äussere Bodenwelle (25) während der Mittelabschnitt (30) der Bodenpartie (16) sich an die zweite, innere Bodenwelle (35) anschliesst.

10. Wärmeschüssel nach Anspruch 9, dadurch gekennzeichnet, dass die beiden Wellen (25,35) so ausgeführt sind, dass die Täler (27,28 bzw. 37,38) derselben die Endpartie der jeweiligen Welle bilden und dass solche Wellen über ihre einander zugewandten Talpartien (27,38) miteinander verbunden sind.

11. Verwendung der Wärmeschüssel nach Anspruch 1 im Zusammenhang mit einer Einrichtung (1), welche die Temperatur des in der Schüssel (5) untergebrachten Geschirrstücks (10) bestimmt.

Fig.1

Fig.3

Fig.2

EP 0 467 000 A1

**Europäisches Patentamt**

# EUROPÄISCHER RECHERCHENBERICHT

Nummer der Anmeldung

**EP 90 81 0549**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 086 907   (H.H. ROTSCHILD)<br>* Spalte 2, Zeile 66 - Spalte 3, Zeile 51; Figur 3 * | 1-7 | A 47 J 39/02<br>A 47 G 23/04 |
| A | | 8-10 | |
| | — — — | | |
| Y | US-A-3 837 330   (R.W. LANIGAN et al.)<br>* Spalte 3, Zeilen 10-60; Figuren 1,2 * | 1-7,11 | |
| A | | 8-10 | |
| | — — — | | |
| Y | US-A-3 916 872   (E. KREIS et al.)<br>* Spalte 6, Zeilen 19-58; Figuren 1,2 * | 1-7,11 | |
| A | | 8-10 | |
| | — — — | | |
| A | CH-A-519 894   (KREIS AG)<br>* Spalte 2, Zeilen 1-15; Figur * | 1-11 | |
| | — — — | | |
| A | CH-A-449 874   (KREIS AG)<br>* Spalte 1, Zeile 35 - Spalte 2, Zeile 14; Figuren 1,2 *<br>— — — — — | 1-11 | |

### RECHERCHIERTE SACHGEBIETE (Int. Cl.5)

A 47 G
A 47 J

Der vorliegende Recherchenbericht wurde für alle Patentansprüche erstellt

| Recherchenort | Abschlußdatum der Recherche | Prüfer |
|---|---|---|
| Den Haag | 18 März 91 | VISTISEN L.M. |